# EUROPEAN PATENT SPECIFICATION

(11) **EP 1 863 857 B1**
(45) Date of publication and mention of the grant of the patent: **31.07.2013**
(21) Application number: 06726452.3
(22) Date of filing: 21.03.2006
(51) Int. Cl.: C08F 110/00

(54) **INFRARED ABSORBING POLYMER COMPOSITIONS AND FILMS**
INFRAROTABSORBIERENDE POLYMERZUSAMMENSETZUNGEN UND -FOLIEN
COMPOSITIONS ET FILMS POLYMERES ABSORBANTS LES INFRAROUGES

(30) Priority: 23.03.2005 GB 0505967
(43) Date of publication of application: 12.12.2007
(73) Proprietor: Imerys Minerals Limited, Par. Cornwall PL24 2SQ (GB)
(72) Inventor: WHITEMAN, David James, Biscovery Par, Cornwall, PL24 2DF (GB); PAYNTER, Christopher Derek, Grampound,Truro TR2 4RY (GB); LONGEVAL, Rudy, Antoine, Theofiel, B-9400 Ninove (BE)
(74) Representative: Rushton, David John
(86) International application number: PCT/GB2006/001024
(87) International publication number: WO 2006/100465

(56) References cited:
- EP-A- 0 314 156
- WO-A-2004/076546
- DE-A1- 19 636 541
- DE-A1- 19 641 396
- DE-A1- 19 831 804
- US-A- 4 075 784
- US-A- 4 954 468
- US-A- 5 475 041
- US-A- 5 773 503
- US-B1- 6 448 316

## Description

### Field of the Invention

This invention relates to polymer films having infrared radiation absorption characteristics. The present invention relates to the polymer films per se and their use as infrared barriers in the agricultural and horticultural industries. More particularly, the present invention relates to polymer films comprising a polymer such as a polyolefin and a fine dehydrated particulate mineral wherein the dehydrated particulate mineral is calcined kaolin. The present invention also relates to methods for controlling and/or increasing the productive yield of agricultural and/or horticultural crops by covering them with such films.

### Background of the Invention

Historically, glass has been used for greenhouse coverings. The advantages of using glass in such applications are well known. These advantages include its long service life and its ability to transmit light, or more specifically, its ability to transmit radiation in the photosynthetically active region (PAR). The wavelength of PAR radiation is in the range of about 0.4 to 0.8µ.m. However, there are a number of disadvantages associated with the use of glass as a covering for plants. For example, glass can only generally be supplied in small sheets, is fragile, requires a large amount of maintenance, including cleaning, and is expensive. Glass can be quite difficult to install and often the seal formed is less than adequate.

More recently, polymers such as low density polyethylene (LDPE) have been used as low cost alternatives to glass. The use of such polymers helps to overcome many of the drawbacks associated with the use of glass. For example, such polymers may be supplied in large rolls, and may be installed more easily with fewer gaps, thus avoiding loss of heat. Polymers such as LDPE are less fragile than glass, significantly cheaper and require less maintenance.

However, there are disadvantages associated with the use of polymer films such as LDPE as coverings for plants and the like. LDPE has a high transmission in the mid to far infrared region and so any heat generated under the film due to the action of sunlight on the plants or soil will be rapidly lost. The mid infrared region is about 7 to 13µm and the far infrared extends to about 25µm.

It is known to add fillers to polymer films in order to improve the heat retention by decreasing the transmission in the mid to far infrared. For example, US 4115347 describes the use of dehydrated kaolinites in polyolefin compositions and films.

There are also drawbacks associated with the use of polymer compositions and films comprising fillers such as those described in US 4115347. The use of inorganic fillers in films may have detrimental effects. For example, the use of such fillers may reduce the visible light transmission and hence the heat gain by the plants during the day. In climates which experience particularly sunny climates, such as Southern Europe, this may not necessarily be a problem and indeed, diffuse illumination and reduced energy levels may be favourable, preventing heat stress and scorching of the plants. However, in cooler areas such as Northern Europe, the requirement is often for maximum transmission of PAR radiation and direct light.

There are further disadvantages associated with the use of fillers, such as dehydrated kaolinites, in polymer films. For example, it is known that the addition of even small amounts of calcined clay can adversely affect the stability of the polymer film leading to significant reductions in service lifetime. One way of addressing this problem has resulted in the increased use of expensive stabilising additives.

In light of these problems, there remains the need to provide suitably modified polymer films which address at least some of the above problems.

The present invention is based on the finding that dehydrated particulate minerals such as calcined kaolin clay, which possess a mean particle size (d₅₀/µm) below a particular value are particularly useful for making infrared absorbing polymer compositions and polymer films.

### Summary of the Invention

The present invention is defined in and by the appended claims. According to a first aspect of the present invention, a polymer film formed from a polymer composition comprising a thermoplastic polymer and a dehydrated particulate mineral having a d₅₀ of less than or equal to about 0.5µm and wherein the dehydrated particulate mineral is calcined kaolin is provided.

The polymer and dehydrated particulate mineral may be selected such that the refractive indices of the polymer and mineral are similar. For example, the refractive indices may vary by an amount in the range of 0 to 0.15, for example 0 to 0.1, typically 0.01 to 0.05.

The polymer composition may be made by a production process, comprising a step of blending said thermoplastic polymer and dehydrated particulate mineral having a d₅₀ of less than or equal to about 0.5µm wherein the dehydrated particulate mineral is calcined kaolin.

According to a second aspect of the present invention, a method for controlling and/or increasing the yield of agricultural crops and/or horticultural crops by covering said crops with a polymer film according to the first aspect of the invention is provided.

According to a third aspect of the present invention there is provided a greenhouse comprising the polymer film according to the first aspect of the present invention.

According to a fourth aspect of the present invention, there is provided the use of a dehydrated particulate mineral having a d₅₀ of less than or equal to about 0.5µm as a filler in combination with a thermoplastic polymer in an infrared absorbing polymer film wherein the dehydrated particulate mineral is calcined kaolin.

The values of d₅₀, unless otherwise stated, are as derived from equivalent spherical diameter (esd) measurements. The esd measurements are made in a well known manner by sedimentation of the particulate material in a fully dispersed condition in an aqueous medium using a sedigraph 5100 machine as supplied by Micromeritics Instruments Corporation, Norcross, Georgia, USA, referred to herein as a "Micromeritics Sedigraph 5100 unit". Such a machine provides measurements and a plot of particle size versus the cumulative percentage by weight of particles having an esd less than the respective particle size.

In a preferred embodiment of the invention, the polymer composition for use in the first aspect of the invention is such that at least about 95% by volume of the dehydrated mineral particles have a particle diameter less than 3µm and the dehydrated particulate mineral is calcined kaolin. Between about 90% and 98% by volume of the calcined kaolin particles may have a particle diameter less than 2µm, for example, between about 93% and about 97% by volume of the calcined kaolin particles may have a particle diameter less than 2µm. Further, less than about 1% by volume of the calcined kaolin particles may have a particle diameter between 3 and 5µm and less than about 40% by volume of the calcined kaolin particles may have a particle diameter between 1 and 5µm. A typical particulate calcined kaolin usable in the present invention may have a particle size distribution such that between about 95% and about 99% by volume of the particles have a particle diameter less than 3µm. For this preferred embodiment of the invention, the term "particle diameter" refers to a particle size measurement as determined by laser light particle size analysis using a CILAS (Compagnie Industrielle des Lasers) 1064 instrument. In this technique, the size of particles in powders, suspensions and emulsions may be measured using the diffraction of a laser beam, based on application of the Fraunhofer theory.

Suitable examples of thermoplastic polymers include polyolefins such as polyethylene, with low density polyethylene (LDPE) being particularly preferred. Other examples of thermoplastic polymers include Ethylene Vinylacetate (EVA). Suitable examples of dehydrated particulate minerals may be provided by kaolin clay.

The polymer films according to the present invention preferably exhibit a % transmission of PAR radiation greater than about 80%, even more preferably greater than about 85%. The polymer films according to the present invention may exhibit a % absorption in the mid to far infrared region, which corresponds to about 7µm to 25µm, of at least 40% and up to about 99% and substantially across the far infrared, i.e. about 13 to 25µm, of about 60% to 95%. At an incident wavelength range used in accordance with ASTM D1003, the polymer films according to the present invention may advantageously possess a transmission of greater than about 80% and preferably greater than about 85%, and/or a value of haze less than about 40% and preferably less than 30% and/or a clarity which is greater than about 90%, preferably greater than about 95%.

### Detailed Description of the Invention

### The dehydrated particulate mineral

The dehydrated particulate mineral may be selected from clay minerals and is calcined kaolin. Clay minerals include kaolin clays.

The extent to which these minerals are dehydrated may vary. For example, they may only be partially dehydrated or they may be substantially and effectively completely dehydrated.

Preferably, the dehydrated particulate mineral has a d₅₀ in the range of about 0.1 to 0.5µm, for example about 0.1 to about 0.4µm, more preferably about 0.3µm to about 0.4µm and most preferably about 0.37µm. These values of d₅₀ are as derived from equivalent spherical diameter (esd) measurements. The esd measurements are made in a well known manner by sedimentation of the particulate material in a fully dispersed condition in an aqueous medium using a sedigraph 5100 machine as supplied by Micromeritics Instruments Corporation, Norcross, Georgia, USA, referred to herein as a "Micromeritics Sedigraph 5100 unit". Such a machine provides measurements and a plot of particle size versus the cumulative percentage by weight of particles having an esd less than the respective particle size.

The dehydrated particulate mineral may be prepared by light comminution, e.g. grinding or milling. The comminution may be carried out by use of beads or granules of a plastic, e.g. nylon, grinding or milling aid. The dehydrated particulate mineral may be refined to remove impurities and improve physical properties using well known procedures. The mineral may be treated by a known particle size classification procedure, e.g. screening and/or centrifuging, to obtain particles having the desired d₅₀ value.

The refractive index of the dehydrated particulate mineral is preferably such that the amount of light scattered and the amount of haze is minimised or is maintained at acceptable levels in the polymer film in which the dehydrated mineral is incorporated.

The dehydrated particulate mineral may be treated with surface coatings and/or thermal treatments and/or neutralising agents. These treatments may serve to neutralise or deactivate surface active groups on the surface of the mineral. An example of a suitable surface coating includes amines such as commercially available Armeen HT. The dehydrated particulate mineral may be surface coated according to known methods of coating particulate minerals and the coating would normally be carried out prior to compounding the dehydrated particulate mineral in the polymer composition. The level of coating is typically about 0.1 to 0.5wt% of the total amount of dehydrated particulate material, for example about 0.3wt% or 0.4wt%. Suitable neutralising agents include the use of at least one basic organic or inorganic compound, such as, for example, ammonium oxalate, sodium carbonate, sodium hydroxide, trisodium phosphate, an alkanolamine or an amino acid.

### Calcined kaolin

Calcined kaolins are kaolins that have been converted from the corresponding (naturally occurring) hydrous kaolin to the dehydroxylated form by thermal methods. Calcination changes the kaolin structure from crystalline to amorphous. The degree to which hydrous kaolin undergoes changes in crystalline form may depend on the amount of heat to which it is subjected. Initially, dehydroxylation of the hydrous kaolin occurs on exposure to heat. At temperatures below about 850-900°C, the product is considered to be virtually dehydroxylated with the resultant amorphous structure commonly being referred to as being a metakaolin. Frequently, calcination at this temperature is referred to as partial calcination and the product may also be referred to as a partially calcined kaolin. Further heating to temperatures above about 900-950°C results in further structural changes such as densification. Calcination at these higher temperatures is commonly referred to as being full calcination and the product is commonly referred to as fully calcined kaolin. Additional calcination may cause formation of mullite which is a very stable aluminium silicate.

Methods for making calcined kaolins are long established and well known to those skilled in the art. The furnace, kiln or other heating apparatus used to effect calcining of the hydrous kaolin may be of any known kind. A typical procedure involves heating kaolin in a kiln, for example a conventional rotary kiln. Typically, the kaolin may be introduced into the kiln as an extrudate from a pug mill. As the kaolin proceeds through the kiln, typically at a starting moisture content of about 25% by weight to facilitate the extrusion of the kaolin, the extrudate breaks down into pellets as a result of the calcination process. A small amount of a binder (such as alum) may be added to the kaolin to provide "green strength" to the kaolin so as to prevent the kaolin from completely breaking down into powder form during the calcination process. The temperature within the kiln should be within a specified range, and will, to a certain extent depend on whether it is desired to make fully calcined or partially calcined kaolin. A relatively low temperature of about 800°C may be used resulting in metakaolin. A higher temperature, for example, in the range of from 900°C to 1200°C, for example about 1050°C to about 1150°C, will result in fully calcined kaolin.

The period of time for calcination of kaolin to produce metakaolin is based upon the temperature in the kiln to which the kaolin is subjected. Generally, the higher the temperature, the shorter the calcination time, and conversely, the lower the temperature, the higher the calcination time.

The calcination process used may be soak calcining, i.e. wherein the hydrous kaolin or clay is calcined for a period of time during which the chemistry of the material is gradually changed by the effect of heating. The calcining may, for example, be for a period of at least 1 minute, in many cases at least 10 minutes, e.g. from 30 minutes to five or more hours. Known devices suitable for carrying out soak calcining include high temperature ovens, rotary kilns and vertical kilns.

Alternatively, the calcination process may be flash calcining, wherein typically, hydrous kaolin is rapidly heated over a period of less than one second, e.g. less than 0.5 second. Flash calcination refers to heating a material at an extremely fast rate, almost instantaneously. The heating rate in a flash calciner may be of the order of 56,000°C per second or greater. It is particularly preferred that the calcined kaolin is prepared by flash calcination, wherein the clay may be exposed to a temperature greater than 500°C for a time not more than 5 seconds. Preferably, the clay is calcined to a temperature in the range of from 550°C to 1200°C; for microsecond periods the temperature may be as high as 1500°C. More preferably the clay is calcined to a temperature in the range of from 800°C to 1100°C; even more preferably a temperature in the range of from 900°C to 1050°C; most preferably a temperature in the range of from 950°C to 1000°C. Preferably, the clay is calcined for a time less than 5 seconds; more preferably for less than 1 second; even more preferably for less than 0.5 seconds; most preferably for less than 0.1 second. Flash calcination of kaolin particles gives rise to relatively rapid blistering of the particles caused by relatively rapid dehydroxylation of the kaolin. Water vapour is generated during calcination which may expand extremely rapidly, in fact generally faster than the water vapour can diffuse through the crystal structure of the particles. The pressures generated are sufficient to produce sealed voids as the interlayer hydroxyl groups are driven off, and it is the swollen interlayer spaces, voids, or blisters between the kaolin platelets which typify flash calcined kaolins and give them characteristic properties.

The flash calcination process may be carried out by injecting the kaolin clay into a combustion chamber or furnace wherein a vortex may be established to rapidly remove the calcined clay from the combustion chamber. A suitable furnace would be one in which a toroidal fluid flow heating zone is established such as the device described in WO 99/24360 and corresponding applications US 6334894 and US 6136740.

In order to prepare the hydrous kaolin, a raw particulate hydrous kaolin may be comminuted to the desired fineness and particle size distribution. Comminution is preferably achieved by use of conventional processing techniques such as milling (e.g. dry ball milling or fluid energy milling), centrifugation, particle size classification, filtration, drying and the like.

In one particular method for preparing the calcined kaolin, a commercially available fine calcined particulate kaolin (which may, for example, have a particle size distribution such that about 79% by volume of the particles have a particle diameter less than 5µm and/or about 57% by volume of the particles have a particle diameter less than 2µm) is comminuted to the desired fineness and particle size distribution. Such a particulate calcined kaolin starting material may, for example, be the fines recovered from the hot exhaust gases which exit the calciner during the normal calcining process. Examples of such fines are described in US-5713998 and the publications referred to therein. Comminution is preferably achieved by use of conventional processing techniques such as sand grinding (e.g. wet sand grinding in suspension), milling (e.g. dry ball milling or fluid energy milling), centrifugation, particle size classification, filtration, drying and the like. Wet sand grinding is preferred, in which case the desired particle size reduction is typically achieved after a work input of about 110 kilowatt-hours per tonne, and the kaolin is then preferably filtered, dried at 80°C and milled to provide the final product.

In another example, the hydrous kaolin may be flash calcined by being heated rapidly for a short period (e.g. about one second), cooled and then wet sand ground, filtered, dried and milled in generally the same way as described above.

The flash calcined kaolin for use in the compositions and films according to the present invention typically has a specific gravity lower than hydrous kaolin, and sometimes also lower than soak calcined kaolin, such as, for example, equal to or less than 2.4, and desirably equal to or less than 2.2.

The particles of the calcined kaolin usable in the present invention preferably have a specific surface area (as measured by the BET liquid nitrogen absorption method ISO 5794/1) of at least about 5m²g⁻¹, e.g. at least about 15m²g⁻¹, at least about 20mg²g⁻¹ or at least about 25m²g⁻¹, and generally about 15-40m²g⁻¹.

### Thermoplastic Polymer

The thermoplastic polymer is suitable for use in the production of polymer films according to the present invention. Polyolefins, such as polyethylene, are preferred. Low density polyethylene (LDPE) is particularly preferred. LDPE may, for example, be formed using high temperature and high pressure polymerisation conditions. The density is low because these polymerisation conditions give rise to the formation of many branches, which are often quite long and prevent the molecules from packing close together to form crystal structures. Hence LDPE has low crystallinity (typically below 40%) and the structure is predominantly amorphous. The density of LDPE is taken to be in the range of about 0.910 to 0.925g/cm³.

Other types of polyeythlene include High Density Polyethylene (HDPE), Linear Low Density Polyethylene (LLDPE) and Ultralow Density Polyethylene (ULDPE), of which, LLDPE is preferred. Generally the densities of these materials is taken to fall within the following ranges: HDPE - 0.935 to 0.960g/cm³; LLDPE - 0.918 to 0.940g/cm³ and ULDPE - 0.880 to 0.915g/cm³.

Further examples of suitable thermoplastic polymers include Ethylene Vinylacetate (EVA). EVA is an example of a polyethylene copolymer. The concentration of vinylacetate groups in the copolymer may vary. Commercial concentrations of vinylacetate groups tend to be in the range of 5 to 50 wt%. For the present invention, an amount of about 5 to 20 wt% is typically suitable with amounts of 9 to 14 wt% being preferred.

For use in the films according to the present invention, EVA may be used in combination with a separate thermoplastic polyolefin such as LDPE. EVA may be used as a middle layer surrounded by LDPE in order to give the EVA the required mechanical properties and the EVA and LDPE will typically be present in roughly equal amounts. Also, if EVA is used as the external layer in the final polymer film it tends to be sticky and trap dust.

### Thermoplastic Polymer Composition - Other Components

As will readily be understood by one of ordinary skill in this art, the polymer composition may typically be compounded with other components or additives known in the thermoplastic polymer compounding art, such as, for example, stabilisers and/or other additives which include coupling agents, acid scavengers and metal deactivators. Acid scavenger additives have the ability to neutralise acidic species in a formulation and may be used to improve the stability of the polymer film. Suitable acid scavengers include metallic stearates, hydrotalcite, hydrocalumite, zinc oxide. Suitable coupling agents include silanes. The stabilisers may be selected from thermo-oxidative stabilisers and photostabilisers. Suitable thermo-oxidative stabilisers include antioxidants and process stabilisers. Suitable photostabilisers include UV absorbers and UV stabilisers. Some UV stabilisers, such as hindered amine light stabilisers (HALS) e.g. commercially available Tinuvin 494, may also be classed as thermo-oxidative stabilisers.

The level of stabiliser or other additive is typically about 0.1 to 0.5wt% of the total weight of the polymer composition, for example about 0.3wt% or 0.4wt%. Advantageously, the interaction between the dehydrated particulate mineral and the stabilising additive in the polymer compositions according to the present invention, may be reduced, giving rise to increased film lifetimes.

### Preparation of Polymer Compositions and Films

The dehydrated particulate mineral, which may or may not have been surface treated, is incorporated in polymer compositions and is typically present at a concentration of up to about 1 to 15 wt% by weight of the final polymer film, for example, about 2 to 10 wt%, for example, about 4 to 7wt%, for example about 5wt%. The polymer composition comprises at least one polymer, which may be referred to as a polymer resin. The term resin means a polymeric material, either solid or liquid, prior to shaping into a plastic article such as the polymer film.

In the case of thermoplastic polymers, the polymer resin is melted (or otherwise softened) prior to formation of the final article, for example the film, and the polymer will not normally be subjected to any further chemical transformations. After formation of the polymer film, the polymer resin is cooled and allowed to harden.

The thermoplastic polymer composition may be made by methods which are well known in the art generally in which a dehydrated particulate mineral filler and the polymer resin are mixed together in suitable ratios to form a blend (so-called "compounding"). In general, the polymer resin should be in a liquid form to enable the particles of the filler to be dispersed therein. Where the polymer resin is solid at ambient temperatures, therefore, the polymer resin may need to be melted before the compounding can be accomplished. In some embodiments, the particulate mineral filler may be dry blended with particles of the polymer resin, dispersion of the particles in the resin then being accomplished when the melt is obtained prior to forming an article from the melt, for example in an extruder itself.

In embodiments of the invention, the polymer resin and the dehydrated particulate mineral filler and, if necessary, any other optional additives, may be formed into a suitable masterbatch by the use of a suitable compounder/mixer in a manner known per se, and may be pelletized, e.g. by the use of a single screw extruder or a twin-screw extruder which forms strands which may be cut or broken into pellets. The compounder may have a single inlet for introducing the filler and the polymer together. Alternatively, separate inlets may be provided for the filler and the polymer resin. Suitable compounders are available commercially, for example from Werner & Pfleiderer.

The polymer compositions for use in accordance with the present invention can be processed to form, or to be incorporated in, articles of commerce in any suitable way. Such processing may include compression moulding, injection moulding, gas-assisted injection moulding, calendaring, vacuum forming, thermoforming, extrusion, blow moulding, drawing, spinning, film forming, laminating or any combination thereof. Any suitable apparatus may be used, as will be apparent to one of ordinary skill in this art.

The articles which may be formed from the polymer compositions are many and varied, including the films according to the present invention.

Methods of making polymer films are well known to those of ordinary skill in the art and may be prepared in a conventional manner. Known methods include the use of casting, extruding and blowing processes. For example, extrusion blown film lines may be used. For those instances where combinations of polymers are used, such as EVA and LDPE, then co-extrusion techniques may be used. Methods of co-extrusion are well known to the person of ordinary skill. Typically, two or more streams of molten polymer resin are joined into a single extrudate stream in such a way that the resins bond together but do not mix. Generally, a separate extruder is required for each stream and the extruders are linked so that the extrudates can flow together in an appropriate manner for the desired application. For making layered films, several extruders may be used in combination and fed together into a complex die that will merge each of the resin streams into a layered film or sandwich material.

The films made according to the present invention may be of a size and thickness appropriate to the final application. For use as films for covering agricultural and/or horticultural crops and in greenhouses, the median thickness of the film is about 100 to 400µm and preferably about 200 to 300µm. For those embodiments where combinations of polymer are used, for example such as LDPE and EVA, then for a film of, for example, about 200µm thickness, a middle layer of about 100µm thickness EVA may be sandwiched between LDPE layers of about 50µm thickness.

The films for use in greenhouse applications include diffuse films, high clarity films, white films and thermic films.

### Brief Description of the Drawings

Embodiments of the invention will now be described, by way of example only and without limitation, with reference to the accompanying drawings, in which:
Figure 1 is a bar chart illustrating the Optical Properties (transmission, haze and clarity) of polymer films made according to the present invention and a number of filled and unfilled polymer films present for the purpose of comparison.
Figure 2 is a plot of % transmission versus wavelength for a polymer film made according to the present invention and filled and unfilled polymer films present for the purpose of comparison.
Figure 3 is a larger scale view of the plot illustrated in Figure 2 of the mid to far infrared region with additional samples.
Figure 4 is a temperature retention plot of a polymer film made according to the present invention and a number of filled and unfilled polymer films present for the purpose of comparison.

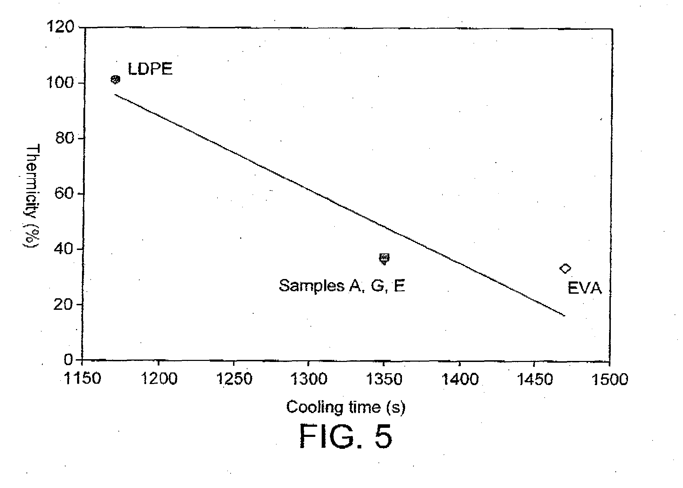

Figure 5 is a plot of thermicity versus cooling time of a polymer film made according to the present invention and a number of filled and unfilled polymer films present for the purpose of comparison.

### Examples

Embodiments of the present invention will now be described by way of example only, with reference to the following examples.

### Test Materials

A series of blown LDPE films of about 100µm thickness were prepared containing a range of calcined clays and treated calcined clays according to Table 1. Samples A to F are present for the purposes of comparison. The base polymer used was ExxonMobil LD100BW and the materials were stabilised with 0.15wt% Tinuvin 494 Hindered Amine Light Stabiliser (HALS). Tinuvin 494 comprises Chimassorb 119F2 and co-additives and is commercially available from Ciba Specialty Chemicals. Chimassorb 119F2 is the following formula:

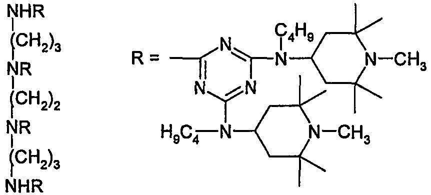

The samples were masterbatched at 10wt% on a Baker Perkins MP2030 twin screw extruder with a die temperature of 180°C prior to being blown on a Dr Collin film line with a processing temperature of 220°C, a screw speed of 75rpm and a haul off of 5.45m min⁻¹. All films were conditioned for 48 hours at 23°C and 50% rh before testing.

**Table 1**

| Filler Sample | Filler Description | d₅₀/µm (sedigraph) | Filler loading/wt% |
|---|---|---|---|
| A | Calcined kaolin clay | 2.12 | 10 |
| B | 0.4wt% Armeen HT coated Sample A | 2.12 | 10 |
| C | Metakaolin (flash calcined clay) | 1.9 | 10 |
| D | 0.9wt% Armeen HT coated Sample C | 1.9 | 10 |
| E | Secondary calcined metakaolin (soak calcined) | 1.9 | 10 |
| F | Secondary calcined metakaolin (soak calcined) | 1.9 | 5 |
| G | Calcined kaolin clay | 0.37 | 10 |
| H | Calcined kaolin clay | 0.37 | 5 |

For the purposes of comparison, and in addition to Samples A to F in Table 1, a 100µm thick film of Ethylene Vinylacetate (EVA) (9% vinyl acetate groups) and a 100µm thick film of LDPE were prepared. Samples A and C to F are all commercially available from Imerys Minerals Ltd. Filler Samples G and H which are in accordance with the present invention, are the same fine sand ground calcined kaolin clay (Polestar 400™, commercially available from Imerys), the particles of which have a specific surface area (as measured by the BET liquid nitrogen absorption method ISO 5794/1) of about 21 m²g⁻¹. Filler samples E and F are the same secondary calcined metakaolin. Armeen HT is a hydrogenated tallowamine which is commercially available from Akzo Nobel.

Film samples were cut from different areas of the lay-flat and the average gauge calculated from the mass of six samples. Three samples with no obvious optical or surface faults were selected and the transmission, haze and clarity measurements recorded and averaged from different areas of the film. Films with gauges either side and as close to the average gauge were selected for this process allowing an extra interpolation to be made to a standard 100µm.

### Test Methods

### Colour

Colour was measured with a Minolta Spectrophotometer DM3610d. The primary illuminant was 6500K radiation with an observation angle of 10°. Measurements were carried out on 4mm thick LDPE injection moulded plaques containing 10wt% filler.

### Haze, Clarity and Transmittance

Each of the haze, clarity and transmittance of the samples was measured with a BYK-Gardner Haze-Gard Plus spectrophotometer in accordance with ASTM D1003.

### Spectral Analysis

The transmission behaviour of the film samples over the wavelength range of 0.25 to 25µm was measured using an ATI Unicam UV/VIS spectrometer with a labsphere integrating sphere, a Buchi NIRflex N-400 near IR spectrometer and a Nicolet Nexus FTIR Spectrometer.

Film samples were mounted in the integrating sphere for the UV/VIS instrument and mounted as close to the detector as possible in order to minimise scattering effects. Samples for the Buchi NIRflex N-400 near IR spectrometer were sandwiched between the reflectance port and a 100% reflectance standard, giving a measure of transmission through a doubled pathlength.

An integral of the FTIR curve between 7 and 25µm was used to calculate a thermicity value for each film.

### Temperature Retention

Temperature retention of the film samples, due to their infrared barrier effect, was measured by monitoring the temperature rise and decay of a confined volume of air behind two layers of sample film. The apparatus was illuminated with a 60W bulb at a distance of 13cm from the film surface, the temperature of the air volume was recorded every 30 seconds with an *in situ* thermocouple till and a temperature of 45°C was reached. At this point, the source of illumination was removed and the temperature loss recorded at 30 second intervals, until ambient was again reached.

### Results

### Optical Properties

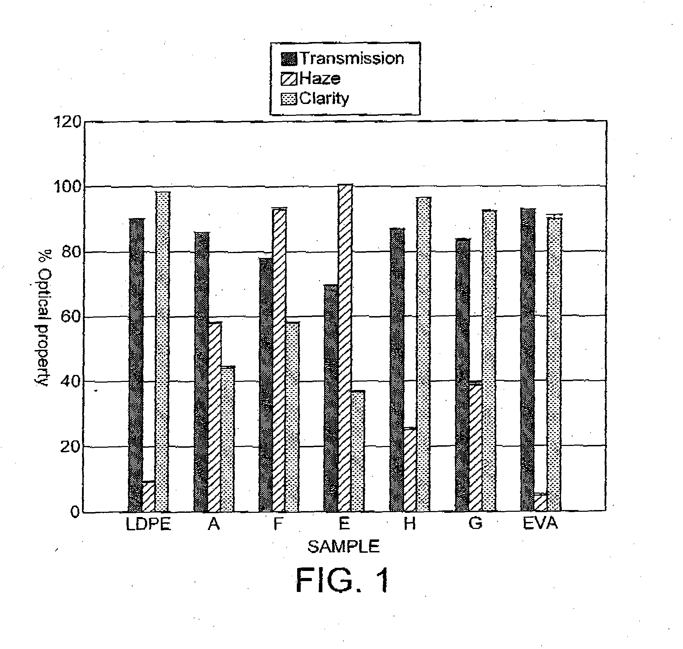

The optical properties are displayed in Figure 1. The unfilled LDPE and EVA samples are referred to as LDPE and EVA respectively. The transmission for Samples G and H are approximately 90%. The fine particle size of Samples G and H gives further improvements over the commercially available samples and yields a film clarity approaching that of the unfilled LDPE. The effect of concentration, and hence scattering events, can be observed with the slightly higher value of clarity and decreased value of haze for Sample H.

### Spectral Data

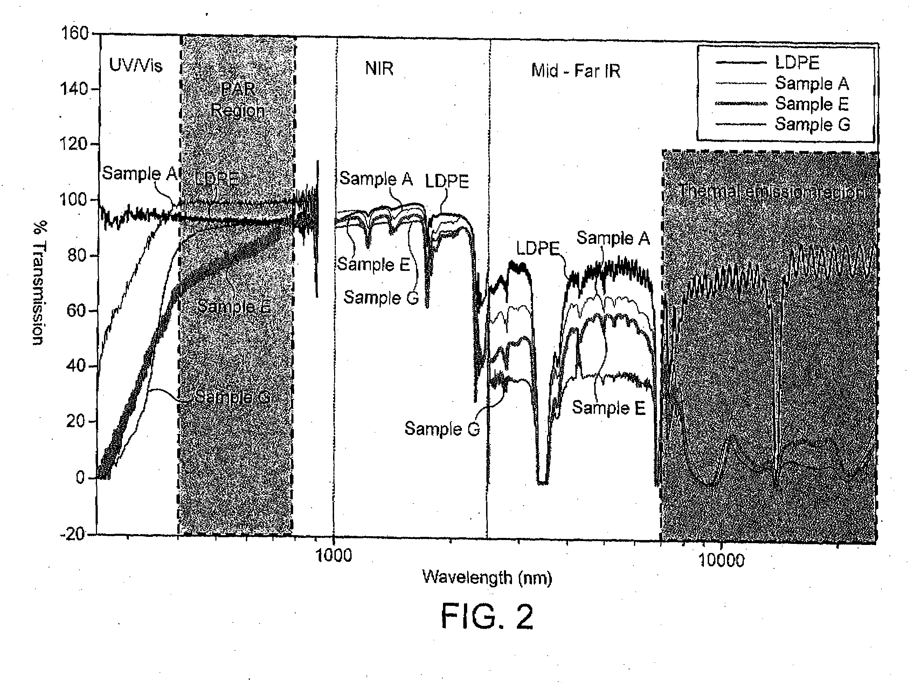

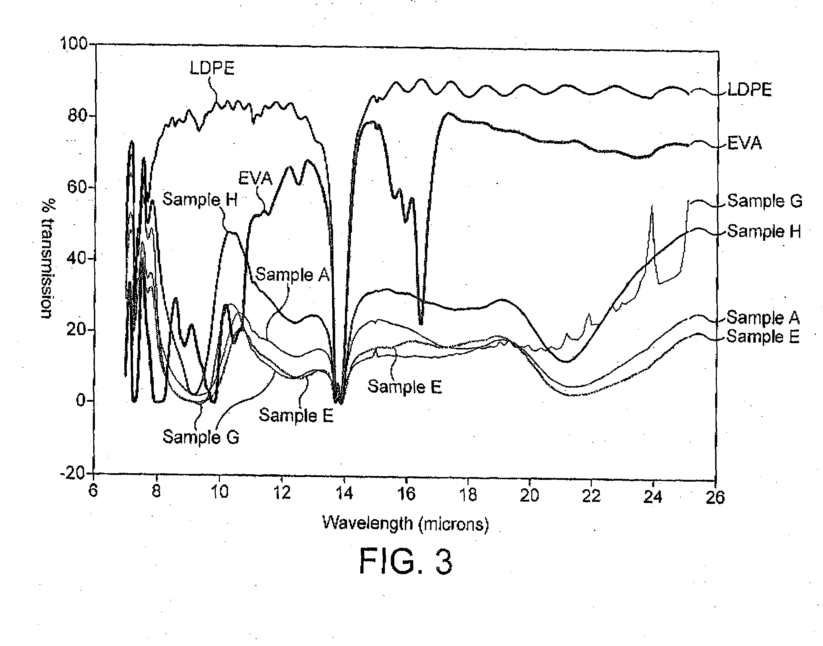

The full spectral data for calcined clay filled films, and unfilled LDPE are shown in Figure 2. A larger scale view of mid to far infrared is shown in Figure 3 in which the spectra for unfilled EVA is also shown.

From the spectra, it can be seen that the transmission characteristics of the samples prepared according to the present invention are comparable to those of the LDPE for the PAR region.

In Figure 3, the strong absorption of the calcined clays in the 7 -25µm region is clearly demonstrated.

### Temperature Retention

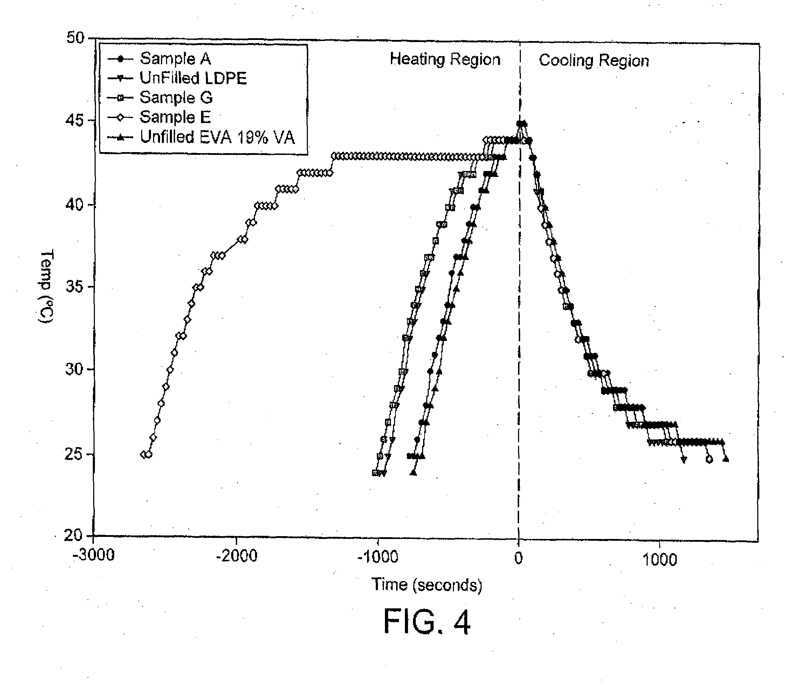

The results for the temperature retention experiments are shown in Table 2 below and Figure 4.

**Table 2**

| Sample | Temperature Retention/s |
|---|---|
| LDPE | 1170 |
| A | 1350 |
| E | 1350 |
| G | 1350 |
| EVA | 1470 |

The plot of the experimental data can be split into two regions, the heating region and the cooling region. The cooling region shows that the fastest cooling is achieved with unfilled LDPE. The slowest cooling is achieved with the EVA film with a vinyl acetate content of 19%, a content which is considerably higher than that used for agricultural films. The calcined clays all show about the same time to reach ambient. The calcined clay filled films show an increase in heat retention over the unfilled LDPE film of 15.4%.

The heating region in Figure 4 shows different behaviour between the clays. Sample E shows a very slow heating which can probably be attributed to the degree of back scatter from this sample, preventing energy from entering the cavity and causing heating. The heating rate of Sample G is very similar to that of the unfilled LDPE which is attributable to a scattering effect caused by the equipment design. Due to its fine particle size, Sample G tends to have a higher degree of backscatter than Sample A, thus restricting the amount of energy entering the cavity, resulting in a slower heating.

### Conclusions

Polymer films comprising dehydrated particulate minerals according to the present invention can be used as effective infrared barriers. The high clarity and low haze of the polymer films may be obtained partly as a result of the refractive index match of the dehydrated particulate mineral to the polymer in combination with the value of d₅₀ of the dehydrated particulate mineral. Analysis of the transmission spectra of the polymer films according to the present invention reveals they exhibit a strong absorption in the region of 7 - 25µm, the desired wavelength range for a good thermal barrier, and a high transmission in the PAR region necessary for photosynthesis.

## Claims

1. A polymer film formed from a polymer composition comprising a thermoplastic polymer and a dehydrated particulate mineral having a d₅₀ of less than or equal to about 0.5µm and wherein the dehydrated particulate mineral is calcined kaolin.

2. A polymer film according to claim 1, wherein the particulate calcined kaolin has a d₅₀ in the range of about 0.1 to 0.5µm.

3. A polymer film according to any one of the preceding claims, wherein the thermoplastic polymer comprises a polyolefin.

4. A polymer film according to claim 3, wherein the polyolefin is polyethylene.

5. A polymer film according to claim 4, wherein the polyethylene is low density polyethylene (LDPE).

6. A polymer film according to any one of the preceding claims, wherein the polymer composition comprises EVA.

7. A polymer film according to any one of the preceding claims, wherein the particulate calcined kaolin has been surface treated.

8. A polymer film according to any one of the preceding claims, further comprising one or more of the following additives: stabilisers, acid scavengers, coupling agents and metal deactivators, wherein the additive is present in an amount of 0.1 to 0.5wt% of the total polymer composition.

9. A polymer film according to any one of the preceding claims, wherein at least about 95% by volume of the calcined kaolin particles have a particle diameter less than 3µm.

10. A polymer film according to the previous claim, wherein between about 90% and 98% by volume of the calcined kaolin particles have a particle diameter less than 2µm.

11. A polymer film according to any one of claims 1 to 10, wherein the particulate calcined kaolin is present in an amount of about 1 to 15wt% of the total polymer film.

12. A polymer film according to any one of claims 1 to 11, wherein the polymer film has a thickness of about 100 to 400µm.

13. A polymer film according to any one of claims 1 to 12, wherein the refractive indices of the thermoplastic polymer and the particulate calcined kaolin vary by an amount in the range of 0 to 0.15.

14. A polymer film according to any one of claims 1 to 13, wherein the polymer film transmits greater than about 80% of PAR radiation.

15. A polymer film according to the previous claim, wherein the polymer film transmits greater than about 85% of PAR radiation.

16. A polymer film according to any one of claims 1 to 15, wherein the polymer film absorbs at least 40% in the mid to far infrared region of the electromagnetic spectrum.

17. A polymer film according to the previous claim wherein the polymer film absorbs up to 99% in the mid to far infrared region of the electromagnetic spectrum.

18. A polymer film according to any one of claims 1 to 17, wherein the polymer film absorbs 60% to 95% across the far infrared region of the electromagnetic region.

19. A polymer film according to any one of claims 1 to 18, wherein the polymer film has a value of haze less than 40% at an incident wavelength used in accordance with ASTM D1003.

20. A polymer film according to the previous claim, wherein the haze is less than about 30%.

21. A polymer film according to any one of claims 1 to 20, wherein the clarity is greater than about 90% at an incident wavelength used in accordance with ASTM D1003.

22. A polymer film according to the previous claim, wherein the clarity is greater than about 95%.

23. The use of a dehydrated particulate mineral having a d₅₀ of less than or equal to about 0.5µm as a filler in combination with a thermoplastic polymer in an infrared absorbing polymer film wherein the dehydrated particulate mineral is calcined kaolin.

24. A method for controlling and/or increasing the yield of agricultural and/or horticultural crops by covering said crops with a polymer film according to any one of claims 1 to 22.

25. A greenhouse comprising a polymer film according to any one of claims 1 to 22.

## Patentansprüche

1. Polymerfilm, gebildet aus einer Polymerzusammensetzung, umfassend ein thermoplastisches Polymer und ein dehydriertes partikelförmiges Mineral mit einem d₅₀ geringer als oder gleich 0,5 µm, und wobei das dehydrierte partikelförmige Mineral calciniertes Kaolin ist.

2. Polymerfilm gemäß Anspruch 1, wobei das partikelförmige calcinierte Kaolin einen d₅₀ im Bereich von etwa 0,1 bis 0,5 µm hat.

3. Polymerfilm gemäß irgendeinem der vorhergehenden Ansprüche, wobei das thermoplastische Polymer ein Polyolefin umfasst.

4. Polymerfilm gemäß Anspruch 3, wobei das Polyolefin Polyethylen ist.

5. Polymerfilm gemäß Anspruch 4, wobei das Polyethylen Polyethylen niederer Dichte (LDPE) ist.

6. Polymerfilm gemäß irgendeinem der vorhergehenden Ansprüche, wobei die Polymerzusammensetzung Ethylenvinylacetat (EVA) umfasst.

7. Polymerfilm gemäß irgendeinem der vorhergehenden Ansprüche, wobei das partikelförmige calcinierte Kaolin oberflächenbehandelt worden ist.

8. Polymerfilm gemäß irgendeinem der vorhergehenden Ansprüche, zudem umfassend eines oder mehrere der folgenden Zusatzmittel: Stabilisatoren, Säurefänger, Kopplungsmittel und Metalldeaktivatoren, wobei das Zusatzmittel in einer Menge von 0,1 bis 0,5 Gew.-% der gesamten Polymerzusammensetzung vorliegt.

9. Polymerfilm gemäß irgendeinem der vorhergehenden Ansprüche, wobei mindestens etwa 95 Vol.-% der calcinierten Kaolinpartikel einen Korndurchmesser geringer als 3 µm haben.

10. Polymerfilm gemäß dem vorhergehenden Anspruch, wobei zwischen etwa 90 Vol.-% und 98 Vol.-% der calcinierten Kaolinpartikel einen Korndurchmesser geringer als 2 µm haben.

11. Polymerfilm gemäß irgendeinem der Ansprüche 1 bis 10, wobei das partikelförmige calcinierte Kaolin in einer Menge von etwa 1 bis 15 Gew.-% des gesamten Polymerfilms vorliegt.

12. Polymerfilm gemäß irgendeinem der Ansprüche 1 bis 11, wobei der Polymerfilm eine Stärke von etwa 100 bis 400 µm hat.

13. Polymerfilm gemäß irgendeinem der Ansprüche 1 bis 12, wobei die Brechungskoeffizienten des thermoplastischen Polymers und des partikelförmigen calcinierten Kaolins sich durch einen Wert im Bereich von 0 bis 0,15 unterscheiden.

14. Polymerfilm gemäß irgendeinem der Ansprüche 1 bis 13, wobei der Polymerfilm größer als etwa 80% PAR-Strahlung durchlässt.

15. Polymerfilm gemäß dem vorhergehenden Anspruch, wobei der Polymerfilm größer als etwa 85% PAR-Strahlung durchlässt.

16. Polymerfilm gemäß irgendeinem der Ansprüche 1 bis 15, wobei der Polymerfilm mindestens 40% im mittleren und fernen Infrarotbereich des elektromagnetischen Spektrums absorbiert.

17. Polymerfilm gemäß dem vorhergehenden Anspruch, wobei der Polymerfilm bis zu 99% im mittleren und fernen Infrarotbereich des elektromagnetischen Spektrums absorbiert.

18. Polymerfilm gemäß irgendeinem der Ansprüche 1 bis 17, wobei der Polymerfilm 60% bis 95% quer durch des fernen Infrarotbereich des elektromagnetischen Spektrums absorbiert.

19. Polymerfilm gemäß irgendeinem der Ansprüche 1 bis 18, wobei der Polymerfilm bei einer einfallenden Wellenlänge gemäß ASTM D1003 einen Eintrübungswert geringer als 40% hat.

20. Polymerfilm gemäß dem vorhergehenden Anspruch, wobei die Eintrübung geringer als etwa 30% ist.

21. Polymerfilm gemäß irgendeinem der Ansprüche 1 bis 20, wobei die Klarheit bei einer einfallenden Wellenlänge gemäß ASTM D1003 größer als etwa 90% ist.

22. Polymerfilm gemäß dem vorhergehenden Anspruch, wobei die Klarheit größer als etwa 95% ist.

23. Verwendung eines dehydrierten partikelförmigen Minerals mit einem d₅₀ von geringer als oder gleich 0,5 µm als Füllstoff in Kombination mit einem thermoplastischen Polymer in einem infrarot absorbierenden Polymerfilm, wobei das dehydrierte partikelförmige Mineral calciniertes Kaolin ist.

24. Verfahren zum Steuern und/oder Erhöhen des Ertrags von landwirtschaftlichen und/oder gärtnerischen Kulturpflanzen durch Bedecken der Kulturpflanzen mit einem Polymerfilm aus irgendeinem der Ansprüche 1 bis 22.

25. Gewächshaus, umfassend einen Polymerfilm aus irgendeinem der Ansprüche 1 bis 22.

## Revendications

1. Film polymère formé à partir d'une composition polymère comprenant un polymère thermoplastique et un minéral particulaire déshydraté ayant une d₅₀ (dimension particulaire moyenne) inférieure ou égale à environ 0,5 µm et dans lequel le minéral particulaire déshydraté est du kaolin calciné.

2. Film polymère selon la revendication 1, dans lequel le kaolin calciné particulaire a une d₅₀ comprise dans l'intervalle d'environ 0,1 à 0,5 µm.

3. Film polymère selon l'une quelconque des revendications précédentes, dans lequel le polymère thermoplastique comprend une polyoléfine.

4. Film polymère selon la revendication 3, dans lequel la polyoléfine est du polyéthylène.

5. Film polymère selon la revendication 4, dans lequel le polyéthylène est un polyéthylène basse densité (LDPE).

6. Film polymère selon l'une quelconque des revendications précédentes, dans lequel la composition polymère comprend de l'EVA (copolymère d'éthylène-acétate de vinyle).

7. Film polymère selon l'une quelconque des revendications précédentes, dans lequel le kaolin calciné particulaire a été traité en surface.

8. Film polymère selon l'une quelconque des revendications précédentes, comprenant en outre un ou plusieurs des additifs suivants: stabilisants, fixateurs d'acide, agents de couplage et désactivateurs de métaux, dans lequel l'additif est présent à raison de 0,1 à 0,5% en poids de la composition polymère totale.

9. Film polymère selon l'une quelconque des revendications précédentes, dans lequel au moins environ 95% en volume des particules de kaolin calciné ont un diamètre particulaire inférieur à 3 µm.

10. Film polymère selon la revendication précédente, dans lequel entre environ 90% et 98% en volume des particules de kaolin calciné ont un diamètre particulaire inférieur à 2 µm.

11. Film polymère selon l'une quelconque des revendications 1 à 10, dans lequel le kaolin calciné particulaire est présent à raison d'environ 1 à 15% en poids du film polymère total.

12. Film polymère selon l'une quelconque des revendications 1 à 11, ledit film polymère ayant une épaisseur d'environ 100 à 400 µm.

13. Film polymère selon l'une quelconque des revendications 1 à 12, dans lequel les indices de réfraction du polymère thermoplastique et du kaolin calciné particulaire varient d'une quantité comprise dans l'intervalle de 0 à 0,15.

14. Film polymère selon l'une quelconque des revendications 1 à 13, ledit film polymère transmettant plus d'environ 80% du rayonnement de PAR (région photosynthétiquement active).

15. Film polymère selon la revendication précédente, ledit film polymère transmettant plus d'environ 85% du rayonnement de PAR.

16. Film polymère selon l'une quelconque des revendications 1 à 15, ledit film polymère absorbant au moins 40% dans la région infrarouge moyen à lointain du spectre électromagnétique.

17. Film polymère selon la revendication précédente, ledit film polymère absorbant jusqu'à 99% dans la région infrarouge moyen à lointain du spectre électromagnétique.

18. Film polymère selon l'une quelconque des revendications 1 à 17, ledit film polymère absorbant 60% à 95% à travers la région infrarouge lointain de la région électromagnétique.

19. Film polymère selon l'une quelconque des revendications 1 à 18, ledit film polymère ayant une valeur de turbidité inférieure à 40% à une longueur d'onde du rayonnement incident utilisée conformément à la norme ASTM D1003.

20. Film polymère selon la revendication précédente, dans lequel la turbidité est inférieure à environ 30%.

21. Film polymère selon l'une quelconque des revendications 1 à 20, dans lequel la clarté est supérieure à environ 90% à une longueur d'onde du rayonnement incident utilisée conformément à la norme ASTM D1003.

22. Film polymère selon la revendication précédente, dans lequel la clarté est supérieure à environ 95%.

23. Utilisation d'un minéral particulaire déshydraté ayant une d₅₀ inférieure ou égale à environ 0,5 µm comme charge en combinaison avec un polymère thermoplastique dans un film polymère absorbant les rayons infrarouges, où le minéral particulaire déshydraté est du kaolin calciné.

24. Procédé pour contrôler et/ou augmenter le rendement des cultures agricoles et/ou horticoles en recouvrant lesdites cultures d'un film polymère selon l'une quelconque des revendications 1 à 22.

25. Serre comprenant un film polymère selon l'une quelconque des revendications 1 à 22.
